(19) Europäisches Patentamt
European Patent Office
Office européen des brevets

(11) **EP 2 306 476 A1**

(12) **EUROPEAN PATENT APPLICATION**
published in accordance with Art. 153(4) EPC

(43) Date of publication:
**06.04.2011 Bulletin 2011/14**

(21) Application number: **09769872.4**

(22) Date of filing: **19.06.2009**

(51) Int Cl.:
***H01G 9/058*** *(2006.01)* ***C01B 31/08*** *(2006.01)*
***H01G 9/038*** *(2006.01)* ***H01M 4/58*** *(2010.01)*
***H01M 10/36*** *(2010.01)*

(86) International application number:
**PCT/JP2009/002788**

(87) International publication number:
**WO 2009/157162 (30.12.2009 Gazette 2009/53)**

(84) Designated Contracting States:
**AT BE BG CH CY CZ DE DK EE ES FI FR GB GR HR HU IE IS IT LI LT LU LV MC MK MT NL NO PL PT RO SE SI SK TR**
Designated Extension States:
**AL BA RS**

(30) Priority: **24.06.2008 JP 2008164084**

(71) Applicant: **Panasonic Corporation**
**Kadoma-shi**
**Osaka 571-8501 (JP)**

(72) Inventors:
- **MAESHIMA, Hiroyuki**
**Osaka 540-6207 (JP)**
- **YAMADA, Chiho**
**Osaka 540-6207 (JP)**
- **SHIMIMOTO, Hideki**
**Osaka 540-6207 (JP)**

(74) Representative: **Kügele, Bernhard et al**
**Novagraaf International SA**
**Avenue du Pailly 25**
**1220 Les Avanchets-Genève (CH)**

(54) **ACTIVATED CARBON FOR ELECTROCHEMICAL ELEMENT AND ELECTROCHEMICAL ELEMENT USING THE SAME**

(57) Van der Waals molecular diameters of a cation, an anion, and a solvent contained in an electrolytic solution are denoted by Lc, La, and Ls, respectively. The minimum widths of van der Waals molecules of the cation, anion, and solvent are denoted by Lmin,c, Lmin,a, and Lmin,s, respectively. The maximum values of Lc, La, Ls, Lmin,c, Lmin,a, and Lmin,s is denoted by W1. The minimum values of (Lc + La), (Lc + Ls), (La +Ls), (Lmin,c + Lmin,a), (Lmin,c + Lmin,s), and (Lmin,a + Lmin,s) is denoted by W2. Under these definitions, the total pore volume of the activated carbon in which a slit width obtained by the MP method is W1 or more and W2 or less is 15% or more of the total pore volume in which the slit width is 2.0 nm or less. With an electrochemical element using activated carbon having pore distribution satisfying this condition, the direct current resistance, in particular, the low-temperature direct current resistance can be reduced.

FIG. 1

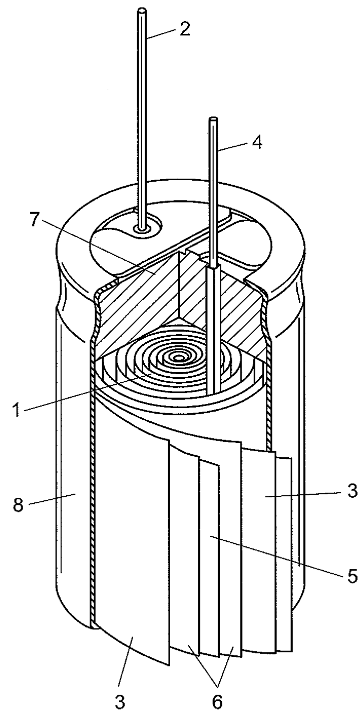


EP 2 306 476 A1

## Description

TECHNICAL FIELD

The present invention relates to activated carbon for an electrochemical element, which is used for various electronic apparatuses, electric apparatuses, and the like, and to an electrochemical element using the activated carbon.

BACKGROUND ART

An electrochemical element includes an electrolytic solution, a positive electrode, and a negative electrode. At least one of the positive electrode and the negative electrode includes a porous carbon material such as activated carbon. Cations or anions in the electrolytic solution adsorb and desorb on the surface of the porous carbon material. With this action, the electrochemical element accumulates and supplies energy, namely charges and discharges.

Examples of such an electrochemical element include an electric double layer capacitor. The electric double layer capacitor employs an electrolytic solution obtained by dissolving tetraethyl ammonium salt or the like in an aprotic organic solvent. Cations or anions in the electrolytic solution adsorb and desorb on the surface of a porous carbon material, thereby the electric double layer capacitor can repeat charging and discharging.

On the other hand, another example of the electrochemical element is a lithium ion capacitor. A positive electrode of the lithium ion capacitor includes a porous carbon material such as activated carbon, and a negative electrode includes graphitic materials such as graphite. The positive and negative electrodes are immersed in an electrolytic solution obtained by dissolving lithium salt in an aprotic organic solvent. On the surface of the porous carbon material of the positive electrode, lithium ions or anions in the electrolytic solution adsorb and desorb. On the graphite and the like of the negative electrode, lithium ions are stored and detached. With such an action, the lithium ion capacitor can repeat charging and discharging.

Other examples include secondary batteries and other electrochemical elements, which include combinations of various types of electrolytic solutions and various types of positive and negative electrodes materials and which are capable of being charged and discharged repeatedly. These electrochemical elements can be used as power source devices of various electronic apparatuses, automobiles such as electric, hybrid, and fuel cell automobiles, and other industrial apparatuses. Electrochemical elements are required to increase an energy density (energy that can be accumulated per unit weight or unit volume) and to increase a power density (output per unit weight or unit volume).

A method for achieving a large energy density of an electrochemical element includes increasing electrostatic capacitance per unit volume. For the method, some porous carbon materials have been proposed.

Patent document 1 proposes a porous carbon material capable of obtaining a desired electrostatic capacitance by setting a total amount of pore volume at a predetermined value or more. In the pore volume, a pore diameter measured by a nitrogen adsorption method falls in a predetermined range.

Patent document 2 proposes activated carbon capable of improving electrostatic capacitance by setting a total amount of pore volume at a predetermined value or more. In the pore volume a pore diameter falls in a predetermined range. And a weight density of the total pore volume limited in a predetermined range.

However, energy density and power density in conventional electrochemical elements are not sufficiently enhanced and leave room for improvement. In particular, performance at such a low temperature as about -30°C should be improved. Therefore, further approaches for reducing a direct current resistance of a porous carbon material such as activated carbon are necessary.

[Citation List]

[Patent documents]

Patent Document 1: Japanese Patent Unexamined Publication No. 2007-320842
Patent Document 2: Japanese Patent Unexamined Publication No. 2006-286923

SUMMARY OF THE INVENTION

The present invention provided activated carbon, which satisfies the following conditions, for reducing a direct current resistance of an electrochemical element including at least activated carbon and an electrolytic solution, and an electrochemical element using the activated carbon.

Van der Waals molecular diameters of a cation, an anion, and a solvent contained in an electrolytic solution

are denoted by Lc, La, and Ls, respectively. The minimum widths of van der Waals molecules of the cation, anion, and solvent are denoted by Lmin,c, Lmin,a, and Lmin,s, respectively. The maximum value of Lc, La, Ls, Lmin,c, Lmin,a, and Lmin,s is denoted by W1. The minimum value of (Lc + La), (Lc + Ls), (La +Ls), (Lmin,c + Lmin,a), (Lmin,c + Lmin,s), and (Lmin,a + Lmin,s) is denoted by W2. Under these definitions, a total pore volume of activated carbon in which a slit width obtained by an MP method is W1 or more and W2 or less is 15% or more of a total pore volume in which the slit width is 2.0 nm or less. With an electrochemical element using activated carbon having pore distribution satisfying this condition, the direct current resistance, in particular, the low-temperature direct current resistance can be reduced.

BRIEF DESCRIPTION OF THE DRAWINGS

Fig. 1 is a partially cutaway perspective view showing an electric double layer capacitor in accordance with an exemplary embodiment of the present invention.
Fig. 2A is a sectional view showing a polarizable electrode of the electric double layer capacitor shown in Fig. 1.
Fig. 2B is a sectional view showing a polarizable electrode of the electric double layer capacitor shown in Fig. 1.
Fig. 3 is a graph showing the relation between an index of the ionic conductivity determined by the molecular dynamics simulation and a slit pore width.
Fig. 4A is a view to illustrate graphene.
Fig. 4B is a view to illustrate a layered crystal of graphene.
Fig. 5 is a graph showing the relation between a resistance index and pore volume distribution of activated carbon.
Fig. 6 is a graph showing the relation between a capacitance index and pore volume distribution of activated carbon.

DETAILED DESCRIPTION OF THE PREFERRED EMBODIMENT

Fig. 1 is a partially cutaway perspective view showing a configuration of an electric double layer capacitor in accordance with an exemplary embodiment of the present invention. The electric double layer capacitor includes case 8, capacitor element 1 accommodated in case 8, and anode lead wire 2 and cathode lead wire 4 connected to capacitor element 1.

Capacitor element 1 includes first polarizable electrode (hereinafter, referred to as "electrode") 3, second polarizable electrode (hereinafter, referred to as "electrode") 5, and separator 6. Anode lead wire 2 is connected to electrode 3. Cathode lead wire 4 is connected to electrode 5. Separator 6 is disposed between electrodes 3 and 5. Separator 6 is made of an insulating porous member, and prevents short-circuit between electrodes 3 and 5. Electrodes 3 and 5 are accommodated in case 8 in a state in which electrodes 3 and 5 face each other and are rolled with separator 6 interposed therebetween.

Rubber sealing member 7 has holes into which anode lead wire 2 and cathode lead wire 4 are inserted, respectively, and is fitted into an upper end portion of case 8. Case 8 is made of metal, and has a cylindrical shape having a bottom and an opening. The opening of case 8 is subjected to drawing processing and curling processing so as to compress sealing member 7, and thus the opening of case 8 is sealed. In this way, an electric double layer capacitor is produced.

Fig. 2A is a sectional view of electrode 3. Electrode 3 includes first current collector (hereinafter, referred to as "current collector") 3A made of metal foil such as aluminum foil, and first polarizable electrode layers (hereinafter, referred to as "electrode layers") 3B provided on surfaces 103A of current collector 3A. Surface 103A is roughened by etching with an electrolytic solution. Electrode layer 3B is mainly made of activated carbon.

Electrode layer 3B is impregnated with electrolytic solution 9. As electrolytic solution 9, a solution obtained by dissolving amidine salt in an aprotic polar solvent such as propylene carbonate can be used. An example is 1 M (=1 mol/ml) electrolytic solution obtained by dissolving salt of 1-ethyl-2,3-dimethyl imidazolium ($EDMI^+$) and tetrafluoroborate ($BF_4^-$) in a mixed solvent of propylene carbonate (PC) and dimethyl carbonate (DMC) that are mixed in the weight ratio of 7 : 3. However, the electrolytic solution is not necessarily limited to this.

As a cation of an electrolyte that can be used in the electrolytic solution, one type of cation or a combination of a plurality of types of cations represented by the following chemical formula (Chem. (1)) can be used. $EDMI^+$ is one cation of this type. The electrolytic solution including such a cation has a property that a withstand voltage is high and a decomposition reaction on the electrode surface does not easily occur as described in, for example, Japanese Patent Unexamined Publication No. 2005-197666. Therefore, it is preferable because the energy density of an electrochemical element can be improved, and the deterioration of performance over time can be suppressed.

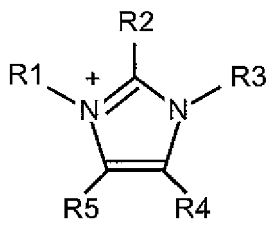

Chem. (1)

(in the chemical formula, independently for each occurrence, R1, R2, R3, R4, and R5 represent a hydrogen atom or an alkyl group containing 1 to 10 carbon atoms, any of R1 to R5 may be the same, and carbon atoms contained in R1 to R5 may bond together to form a cyclic structure).

As an anion of an electrolyte that can be used in the electrolytic solution, hexafluorophosphate can be used instead of $BF_4^-$. Alternatively, a combination with $BF_4^-$ may be used. The electrolytic solution including such an anion also has a property that a withstand voltage is high and a decomposition reaction on the electrode surface does not easily occur as described in, for example, Japanese Patent Unexamined Publication No. 2005-197666. Therefore, it is preferable because the energy density of an electrochemical element can be improved, and the deterioration of performance over time can be suppressed.

Fig. 2B is a sectional view of electrode 5. Electrode 5 includes second current collector (hereinafter, referred to as "current collector") 5A made of aluminum foil, and second polarizable electrode layers (hereinafter, referred to as "electrode layer") 5B provided on surfaces 105A of current collector 5A. Surface 105A is roughened by etching with an electrolytic solution. Electrode layer 5B has activated carbon having an acidic surface functional group. Similar to electrode layer 3B, electrode layer 5B is impregnated with electrolytic solution 9.

Note here that by pressing electrode layers 3B and 5B of electrodes 3 and 5, the surface roughness of electrode layers 3B and 5B is reduced and simultaneously the electrode density is increased.

The following are descriptions of a production method of activated carbon that can be used in electrode layers 3B and 5B, and measurement methods of a specific surface area and pore distribution thereof. Examples of carbonaceous materials as raw materials of the activated carbon may include hardly-graphitizable carbon (referred to as "hard carbon"), easily-graphitizable carbon, and mixtures thereof. Examples of the hard carbon may include woods, sawdust, charcoal, coconut husk, cellulosic fiber, and synthetic resin (for example, phenol resin). Examples of the easily-graphitizable carbon may include coke (for example, pitch coke, needle coke, petroleum coke, and coal coke), pitch (for example, a mesophase pitch), polyvinyl chloride, polyimide, and polyacrylonitrile (PAN).

If necessary, a carbonaceous material carbonized before activation process is used as an activated carbon raw material. In the activation process, pores are formed on the surface of the carbonaceous material so a s to increase the specific surface area and a pore volume. Examples of the known processes include gas activation of manufacturing activated carbon by heating a carbonaceous material in coexistence of gas, and chemical activation of manufacturing activated carbon by heating a mixture of an activation agent and a carbonaceous material. By the process arbitrarily selected from the well-known processes, activated carbon can be manufactured. A specific method of the activation process is disclosed in, for example, Japanese Patent Unexamined Publication No. 2008-147283.

For measurement of the specific surface area and the pore distribution of activated carbon, BELSORP 28SA device available from BEL JAPAN is used. The pore diameter distribution is analyzed by using an MP method (R. SH. MICHAIL et al., J. Coll. Inter. Sci., 26(1968) 45). In the MP method, a pore assumes to have a slit shape, and the total volume of pores having the slit width is calculated as a function of the slit width.

The following is a description of the optimum conditions for the pore distribution of activated carbon to reduce a direct current resistance of an electric double layer capacitor. The optimum conditions for the pore distribution of activated carbon are thought to be different depending upon the compositions of the electrolytic solution to be combined. Therefore, a method of determining the pore diameter distribution of activated carbon from the structure and the size of the ion and the solvent contained in the electrolytic solution is described.

In general, the size of a molecule (including an ion) can be represented by a diameter (van der Waals molecular diameter) of a sphere having the same volume as the volume occupied by the van der Waals sphere of the atoms constituting the molecule. Furthermore, the molecule formed by the overlap of the van der Waals spheres of the atoms may take various shapes other than a sphere. As a reference of the size of such a molecule, the minimum value of the distance between planes that sandwich the molecule, that is, the minimum width of the molecule (the minimum van der Waals width) can be employed.

In the viewpoint of the molecular size as mentioned above, a method for reducing a direct current resistance is considered. The direct current resistance due to the ion conduction in the pore of activated carbon is thought to be dependent upon the diffusion rate of an ion in the pore. An ion in the slit-shaped pore is pressed and deformed by the repulsive power from two walls of the pore according to the reduction of the pore diameter, i.e., the slit width. As a result,

the orientation and the structure of an ion are changed in such a manner that a projected area to the plane parallel to the pore wall is increased. In such a case, considering the diffusion of the ion to the direction parallel to the pore wall, a cross-sectional area for hitting of the ion is increased, and therefore the diffusion rate is reduced and the direct current resistance is increased.

From such a viewpoint, in order to prevent the reduction of the ionic conductivity, the pore diameter of activated carbon only needs to be not less than a predetermined size that does not cause a forcible change of the orientation and the structure of the ion. This predetermined value is thought to be the van der Waals diameter or the minimum van der Waals width of the ion.

On the other hand, ions are stabilized by forming an ion associate of a cation and an anion or a solvated ion by solvation in an electrolytic solution. However, the interaction between the central ion and ligand in the ion associate or the solvated ion deteriorates the ionic conductivity. That is to say, the ion associate of a cation and an anion is electrically neutral, and ions forming the associate do not contribute to the ionic conductivity. Furthermore, the solvated ion has larger effective molecular weight as compared with a single ion, and the diffusion rate is lowered and the ionic conductivity is reduced.

When a pore of activated carbon is small such that and an ion associate or a solvated ion cannot be formed, ions in the pore are not subjected to the interaction with a ligand and are diffused along the pore wall without taking in a counter ion or a solvent. Therefore, the ion diffusion rate tends to be larger than the case in which the ion associate or the solvated ion is formed.

As to the ion diffusion in the pore, the verification result by the molecular dynamics simulation is shown later.

From such a viewpoint, in order to improve the ionic conductivity, the pore diameter of activated carbon is required to be not larger than a predetermined size that does not allow ions to form an ion associate or a solvated ion. This predetermined value is thought to be the van der Waals diameter or the minimum van der Waals width of an associate (dimer) of a cation and an anion, or an associate (dimer) of a cation or an anion and a solvent.

Herein, van der Waals molecular diameters of a cation, an anion, and a solvent contained in an electrolytic solution are denoted by Lc, La, and Ls, respectively. The minimum widths of van der Waals molecules of the cation, the anion, and the solvent contained in the electrolytic solution are denoted by Lmin,c, Lmin,a, and Lmin,s, respectively. The maximum value of Lc, La, Ls, Lmin,c, Lmin,a, and Lmin,s is denoted by W1. Furthermore, the minimum value of (Lc+La), (Lc+Ls), (La+Ls), (Lmin,c + Lmin,a), (Lmin,c + Lmin,s), and (Lmin,a + Lmin,s) is represented by W2. At this time, in order to reduce the direct current resistance, the total pore volume of activated carbon, in which a slit width obtained by an MP method is W1 or more and W2 or less, only needs to be a predetermined value or more.

Activated carbon has a large surface area because it includes pores called micro-pores which have a diameter of mainly 2.0 nm or less and which are extremely grown three-dimensionally. The distribution of the slit widths of the pores of activated carbon is mainly in 2.0 nm or less. Pores having a slit width of more than 2.0 nm hardly affect the size of the direct current resistance. Therefore, in order to reduce the direct current resistance, it is more preferable that a larger number of pores, which have a slit width of 2.0 nm or less and which contributes to the ion diffusion and not allow particles preventing the ion diffusion to enter, are included in the pores. Specifically, the ratio of such pores may be 15% or more. This ratio does not have an upper limit, and may be 100% as mentioned below.

The reason therefor is described with reference to a specific example. In one example, 1-ethyl-2,3-dimethyl imidazolium ($EDMI^+$) is used as a cation. Tetrafluoroborate ($BF_4^-$) is used as an anion. A mixture solvent of propylene carbonate (PC) and dimethyl carbonate (DMC) is used as a solvent. Table 1 shows various parameters of $EDMI^+$, $BF_4^-$, PC, and DMC, respectively. Specifically, Table 1 shows the van der Waals volume (Vvdw), the van der Waals radius (Rvdw), a half value of the minimum width of van der Waals molecule (Rmin), and a radius (Rqm) of a sphere having the same volume as that of a region whose electric density in the stable structure by the first principle molecular orbital calculation (HF/6-31G(d)) is 0.001 (au) or more. However, Vvdw is calculated by placing the van der Waals sphere in the central position of each atom in an ion and a molecule in the stable structure by HF/6-31G(d) and by integrating the volume occupied by the van der Waals sphere.

The first principle molecular orbital calculation is carried out by using program Gaussian03 (Gaussian Inc.), and the van der Waals radius of hydrogen (H) is 1.20 Å, that of carbon (C) is 1.70 Å, that of nitrogen (N) is 1.55 Å, that of fluorine (F) is 1.47 Å, and that of boron (B) is 1.70 Å. The values of H, C, N, and F are cited from the values of Bondi (A. Bondi, J. Phys. Chem., 68(1964) 441). The value of B is the same as the value of C, but boron is surrounded by four fluorines F in $BF_4^-$ and the ion volume of $BF_4^-$ is not sensitive to the value of boron B. Furthermore, in all ions and molecules, the values of Rvdw and Rqm are in excellent agreement with each other.

Table 1

| | Vvdw ($nm^3 \times 10^{-3}$) | Rvdw ($nm \times 10^{-1}$) | Rmin ($nm \times 10^{-1}$) | Rqm ($nm \times 10^{-1}$) |
|---|---|---|---|---|
| $EDMI^+$ | 182.86 | 3.52 | 5.12 | 3.43 |
| $BF_4^-$ | 67.20 | 2.52 | 4.55 | 2.35 |
| PC | 108.13 | 2.96 | 4.97 | 3.05 |
| DMC | 124.97 | 3.10 | 4.03 | 2.94 |

The van der Waals molecular diameters (Rvdw × 2) of a cation, an anion, and a solvent in Table 1 are denoted by Lc, La, and Ls, respectively. Then, the minimum widths (Rmin × 2) of the van der Waals molecules of a cation, an anion, and a solvent are denoted by Lmin,c, Lmin,a, and Lmin,s, respectively. Furthermore, the maximum value of Lc, La, Ls, Lmin,c, Lmin,a, and Lmin,s is denoted by W1. The minimum value of (Lc+La), (Lc+Ls), (La+Ls), (Lmin,c + Lmin, a), (Lmin,c+Lmin,s), and (Lmin,a+Lmin,s) is denoted by W2. Herein, since two types of solvents, PC and DMC, are present, Ls and Lmin,s with respect to each solvent are considered and the values Ls (PC), Ls (DMC), Lmin,s (PC), and Lmin,s (DMC) are defined. Then, W1 and W2 are determined for all the values.

As a result, W1 is Lmin,c of $EDMI^+$, and W1 = Lmin,c = 10.24 Å ≅ 1.0 nm is satisfied. Furthermore, W2 is determined by La of $BF_4^-$ and Ls (PC) of PC, and W2 = La + Ls (PC) = 10.96 Å ≅ 1.1 nm is satisfied. Note here that in this example, DMC is not involved in the determination of W1 and W2.

Therefore, in this example, the total pore volume in which the slit width obtained by the MP method is 1.0 nm or more and 1.1 nm or less needs to be 15% or more of the total pore volume in which the slit width is 2.0 nm or less. By using activated carbon having pore distribution that satisfies this condition, the direct current resistance can be reduced.

Next, an analysis of the ionic conductivity in slit pores of activated carbon by using molecular dynamics (MD) simulation is described.

In the simulation, the following condition is applied. Total 256 particles including 20 particles of $EDMI^+$, 20 particles of $BF_4^-$, and 215 particles of PC are provided in a unit cell in such a manner that the particles are contained between two parallel slit walls. Under the periodic boundary condition, the ion diffusion to the direction parallel to the slit walls is analyzed. Hereinafter, the specific method thereof is described.

For bonding potential (bond stretching, angle bending, dihedral rotation) and non-bonding potential (Van der Waals potential) between atoms, an AMBER type force field function (W. D. Cornell, P. Cieplak, C. I. Bayly, I. R. Gould, K. M. Merz Jr., D. M. Ferguson, D. C. Spellmeyer, T. Fox, J. W. Caldwell, and P. A. Kollman, J. Am. Chem. Soc., 117 (1995) 5179) is applied. Electrostatic potential between atoms is evaluated by the Ewald method by applying a restrained electrostatic potential (RESP) electric charge (C. I. Bayly, P. Cieplak, W. D. Cornell, and P. A. Kollman, J. Phys. Chem., 97(1993) 1026), which is determined by the first principle molecular orbital calculation HF/6-31G(d) as an atomic charge.

A slit wall is assumed to have graphite type Steel potential (W. A. Steele, Surface Science, 36 (1973) 317). Furthermore, surface polarization excited by the electric charge of electrolytic solution particles is approximated by using the mirror image charge of the atomic charge. The interaction between the atomic charge and the mirror image charge is considered only when the distance between the atomic charge and the mirror image charge is 12Å or less among infinite number of mirror image charges generated from the parallel two slit walls.

In such an assumption, an MD simulation in which temperature (298 K) and pressure (1 atm) are constant is carried out. For temperature control, well-known methods such as Nose-Hoover method (S. Nose, Mol. Phys. Vol.52, No.2 (1984) 255, W. G. Hoover, J. Chem. Phys. Vol.46, No.2 (1966) 686, W. G. Hoover, Phys.Rev. A. Vol.31, No. 3 (1985) 1695) can be applied. For pressure control, well-known methods such as Parinello-Rhaman method (M. Parrinello and A. Rahman, Rhys. Rev. Lett. Vol. 45, No.14 (1980) 1196) can be applied. Change over time of barycentric coordinates of ions in the resultant equilibrium state is recorded as a trajectory of 60000 points, 6 ns for each 0.1 ps. These data are used for analysis of the ion diffusion.

The ionic conductivity can be evaluated by Formula 1 based on the linear response theory (R. Kubo, J. Phys. Soc. Jpn.,12 (1957) 570).

$$6tVk_BT\lambda = e^2\left\langle \sum_i \sum_j z_i z_j \left[\vec{R}_i(t) - \vec{R}_i(0)\right]\left[\vec{R}_j(t) - \vec{R}_j(0)\right] \right\rangle \quad \text{(Formula 1)}$$

wherein t denotes a time, V denotes a volume, $K_B$ denotes a Boltzman's constant, T denotes a temperature, λ denotes conductivity, e denotes an elementary charge, $Z_i$ denotes the number of ionic charge of the i-th ion, $\overline{R}_i$ denotes barycentric

coordinates of the i-th ion, and parentheses <> denotes a thermodynamic average.

Furthermore, Einstein relation (Formula 2) for the ion diffusion can be also applied.

$$6tVk_BT\lambda = e^2\left\langle \sum_i z_i^2 \left| \vec{R}_i(t) - \vec{R}_i(0) \right|^2 \right\rangle \qquad \text{(Formula 2)}$$

wherein t denotes a time, V denotes a volume, $K_B$ denotes a Boltzman's constant, T denotes a temperature, $\lambda$ denotes conductivity, e denotes an elementary charge, $Z_i$ denotes the number of ionic charge of the i-th ion, $\overline{R}_i$ denotes barycentric coordinates of the i-th ion, and parentheses <> denotes a thermodynamic average.

Formula 1 is generalized Formula 2, and Formula 1 includes the cross-correlation function and Formula 2 includes the auto-correlation function in the respective right hands. Formula 1 cannot evaluate the diffusion coefficient of a cation and an anion separately, but can evaluate the ionic conductivity of a system having a strong interaction between ions with high accuracy.

Table 2 and Fig. 3 show the analysis result of the conductivity. Herein, $\Lambda$ (Total) signifies a time derivative of the right hand of Formula 1, and $\Lambda$ ($EDMI^+$) and $\Lambda$ ($BF_4^-$) signify time derivatives of the right hands of Formula 2 of $EDMI^+$ and $BF_4^-$, respectively. The A represents TD-CMSD (Time Derivative Collective Mean Square Displacement).

Table 2

| Slit width L1 (nm) | Slit width L2 (nm) | 1/L1 ($nm^{-1}$) | $\Lambda$(Total) ($nm^2$/psec $\times 10^{-2}$) | $\Lambda$(Total) ($nm^2$/psec $\times 10^{-2}$) | $\Lambda$(Total) ($nm^2$/psec $\times 10^{-2}$) |
|---|---|---|---|---|---|
| 2.00 | 1.62 | 0.50 | 1.354 | 1.148 | 1.360 |
| 1.50 | 1.12 | 0.67 | 3.517 | 4.381 | 4.452 |
| 1.25 | 0.87 | 0.80 | 2.110 | 2.998 | 3.449 |
| 1.00 | 0.62 | 1.00 | 0.819 | 1.960 | 1.812 |

In Table 2, slit width L1 is a distance between the two slit planes (planes in which a center of carbon atoms constituting the slit wall is present), and slit width L2 is a value obtained by subtracting the van der Waals molecular diameter (0.3816 nm) of carbon used in Steel potential from L1, and corresponds to a slit width determined by the measurement of the pore distribution by the MP method. Fig. 3 shows a plotting of the change of TD-CMSD with respect to 1/L1, and shows a value of L2 corresponding to each plot.

$\Lambda$ ($EDMI^+$) and $\Lambda$ ($BF_4^-$) are diffusion coefficients of ions. In a dilute electrolytic solution, the sum of $\Lambda$ ($EDMI^+$) and $\Lambda$ ($BF_4^-$) affects the ionic conductivity of an electrolytic solution. However, since the interaction between ions becomes strong when the concentration of the electrolytic solution is a predetermined concentration or higher, $\Lambda$ (Total) needs to be considered. In the results of Table 2 and Fig. 3, $\Lambda$(Total) is smaller than the sum of $\Lambda$ ($EDMI^+$) and $\Lambda$ ($BF_4^-$). This means that a cation-anion associate is formed by the interaction between ions, for example, thereby reducing the ionic conductivity of an electrolytic solution.

Table 2 and Fig. 3 show that the ionic conductivity in the slit pore becomes a maximum when slit width L2 obtained by the MP method is in the range of 1.0 nm to 1.1 nm and in its vicinity. The optimum range of this slit width agrees with the above-mentioned optimum range.

Thus, the ionic conductivity has a maximum value as a function of the slit width. $EDMI^+$ $BF_4^-$ / PC system has a maximum when the slit width is in the range of 1.0 nm to 1.1 nm and in its vicinity. The lower limit and the upper limit of the slit width correspond to the values determined from the structure and the size of the ions and the solvent molecule constituting the electrolytic solution.

The electric double layer capacitor is required to reduce the direct current resistance and to increase the electrostatic capacitance. Next, the electrostatic capacitance is considered.

The electrostatic capacitance by ion adsorption to the pore wall of activated carbon is thought to be dependent on the amount of ions that can be taken in the pore of the activated carbon and the distance between the ion and the pore wall. As the amount of ions to be taken into the pore is increased, the electrostatic capacitance may be increased. Furthermore, as the distance between the ion in the pore and the pore wall is smaller, the distance between the electric charge of the ion and the inverse charge of the ion polarized on the pore wall is reduced. Therefore, the electrostatic capacitance of the electric double layer made by the pair charge is increased.

Since the ion associate of a cation and an anion is electrically neutral, the ion associate does not contribute to

the electrostatic capacitance even when the ion associate is adsorbed on the pore wall. Furthermore, since the ion radius of the solvated ion is larger than that of a single ion, when the solvated ion is adsorbed on the pore wall via a solvent molecule, the distance between the ion and the pore wall is increased, and thus the electrostatic capacitance becomes smaller than that of a single ion.

From such a viewpoint, in order to increase the electrostatic capacitance, the pore diameter of activated carbon is required to have a size that is not larger than a predetermined size that does not allow ions to form an ion associate or a solvated ion. This predetermined value is thought to be the van der Waals diameter or the minimum van der Waals width of an associate (dimer) of a cation and an anion, or an associate (dimer) of a cation or an anion and a solvent.

Therefore, in order to increase the electrostatic capacitance, it is desirable that the total pore volume of activated carbon in which a slit width obtained by the MP method is W2 or less is a predetermined value or more. Specifically, it is desirable that such a total pore volume is 0.9 ml/g or more.

When the above-mentioned $EDMI^+ BF_4^-$/ (PC + DMC) is used as an electrolytic solution, W2 is determined by La of $BF_4^-$ and Ls(PC) of PC, and W2 = La + Ls(PC) = 10.96 Å ≅ 1.1nm is satisfied. Therefore, when this electrolytic solution is used, in order to increase the electrostatic capacitance, the total pore volume in which the slit width obtained by the MP method is 1.1 nm or less needs to be 0.9 ml/g or more.

Therefore, in addition to the above-mentioned conditions, it is preferable to use activated carbon having the total amount of the pore volume in which the slit width obtained by the MP method is 1.0 nm or more and 1.1 nm or less is 15% or more of the total amount of the pore volume in which the slit width is 2.0 nm or less. This makes it possible to reduce the direct current resistance and to increase the electrostatic capacitance. To be generalized, it is desirable that the total pore volume of activated carbon in which a slit width obtained by the MP method is W1 or more and W2 or less is not less than a predetermined ratio with respect to the total pore volume in which the slit width is 2.0 nm or less, and that the total pore volume of activated carbon in which the slit width obtained by the MP method is W2 or less is a predetermined value or more.

It is desirable that the larger the total pore volume satisfying these conditions is, the better. However, the total amount of the pore volume has an upper limit. Hereinafter, the upper limit is described.

With respect to the condition that the total pore volume in which the slit width obtained by the MP method is 1.0 nm or more and 1.1 nm or less is 15% or more of the total pore volume in which the slit width is 2.0 nm or less, the upper limit of the total pore volume satisfying the condition is naturally 100%. Actually, however, from the present general manufacturing technologies of activated carbon or economical efficiency such as a manufacturing cost, it is not easy to suppress the variation from a predetermined range of the distribution of the slit width. Therefore, the upper limit is thought to be less than 100%. However, since the present invention provides optimum designing conditions of the pore of activated carbon, it does not additionally set the upper limit of other than 100%.

With respect to the condition that the total pore volume in which the slit width obtained by the MP method is 1.1 nm or less is 0.9 ml/g or more, the upper limit of the total pore volume satisfying this condition is limited by a structure of the slit of activated carbon. The upper limit is determined as follows.

Assuming a slit formed of a plurality of parallel graphenes, and the graphene is one hexagon plane of graphite. The pore volume density made by a predetermined amount of graphenes is increased as the interval of the graphenes, that is, the slit width, is increased. However, according to the conditions of the present invention, the slit width is limited to 1.1 nm or less, measured on the basis of the MP method. Therefore, the pore volume density has a maximum value when the slit width corresponds to 1.1 nm measured on the basis of the MP method.

Length L1 between two graphenes corresponds to a value obtained by adding the van der Waals diameter of carbon (0.3816 nm) to slit width L2 measured on the basis of the MP method. Therefore, when L2 is 1.1 nm, L1 becomes 1.4816 nm. Fig. 4A is a schematic view showing unit cell Sg of graphene (shown by a thick broken line). Unit cell Sg has two carbon atoms, and has an area of 0.05246 $nm^2$. Fig. 4B is a schematic view showing unit cell Vg of a graphene layered crystal (shown by a thick broken line) formed by laminating graphenes shown in Fig. 4A at an interval of L1 = 1.4816 nm. Unit cell Vg has two carbon atoms, and has a volume of 0.07772 $nm^3$. This graphene crystal has a slit structure having the maximum pore volume density.

Thus, the slit volume contained in the unit cell of the graphene layered crystal shown in Fig. 4B is 0.05771 (= Sg $\times$ 1.1) $nm^3$, and the pore volume density of this slit structure is 1.43174 $\times$ $10^{-25}$ (= 0.05771 / (2 $\times$ 12.0107 / (6.0221367 $\times$ $10^{23}$))) $nm^3$/g, i.e., 1.43174 ml/g. Herein, the atomic weight of carbon is 12.0107, and the Avogadro's number is 6.0221367 $\times$ $10^{23}$. That is to say, the activated carbon of the present invention satisfies the condition that the total pore volume in which the slit width obtained by the MP method is 1.1 nm or less is 0.9 ml/g or more, and the upper limit of the total pore volume satisfying the condition is not particularly specified but it is 1.43174 ml/g. Thus, the pore volume density is necessarily limited by a structure of the slit of the activated carbon.

The activated carbon of the exemplary embodiment does not limit a manufacturing process or raw materials, and means a porous conductive material characterized by the pore distribution determined by the MP method. Generally called porous carbon materials may be used. At present, however, from the viewpoint of manufacturing cost and the like, it is thought to be valuable to industrially use activated carbon.

Hereinafter, activated carbon in accordance with this exemplary embodiment and an electric double layer capacitor using the activated carbon are described with reference to specific examples. Table 3 shows parameters of sample X and samples A to D of all the activated carbon used in this exemplary embodiment. Herein, a pore volume in which a slit width is 2.0 nm or less, that is, a total pore volume, is defined as pore volume A (ml/g). A slit width when the pore volume is maximum is defined as a peak pore diameter (nm). The pore volume in which the slit width is 1.0 to 1.1 nm is defined as pore volume B (ml/g). The pore volume in which the slit width is 1.1 nm or less is defined as pore volume C (ml/g). Table 3 shows average particle diameter D50 (μm) and the total surface area ($m^2/g$) in addition to the above.

Table 3

| | X | A | B | C | D |
|---|---|---|---|---|---|
| Average particle diameter D50 (μm) | 3.9 | 3.7 | 3.3 | 5.3 | 3.0 |
| Total surface area ($m^2/g$) | 2197 | 2037 | 2049 | 2194 | 2481 |
| Total pore volume A (ml/g) | 1.06 | 1.10 | 1.16 | 1.15 | 0.98 |
| Peak pore diameter (nm) | 0.9 | 0.9 | 0.9 | 0.9 | 0.8 |
| Pore volume B (ml/g) | 0.105 | 0.232 | 0.266 | 0.182 | 0.024 |
| B/A(%) | 9.9 | 21.1 | 22.9 | 15.9 | 2.5 |
| Pore volume C (ml/g) | 0.896 | 0.810 | 0.751 | 0.905 | 0.910 |
| C/A (%) | 84.53 | 73.64 | 64.74 | 78.7 | 92.86 |

Next, a production method of electrodes 3 and 5 is described. Firstly, commercially available carboxymethylcellulose (CMC) as a water soluble binder and acetylene black are mixed to the activated carbon shown in Table 3. At this time, the mass ratio of activated carbon : CMC : acetylene black is set at 8 : 1 : 1. This mixture is formed into paste. The prepared paste is applied to aluminum foil as current collector 3A or current collector 5A, which is dried so as to form a sheet-like electrode body. Furthermore, this electrode body is subjected to press working so as to form electrode layer 3B or electrode layer 5B. The pressed electrode body is cut into a predetermined dimension. The end portion of the electrode layer is peeled off, and anode lead wire 2 or cathode lead wire 4 is connected to the current collector. Thus, electrodes 3 and 5 are completed.

By using the thus produced electrodes 3 and 5, an electric double layer capacitor having a diameter of 18 mm and a height of 50 mm is assembled. At this time, electrolytic solution having a concentration of 1 M obtained by dissolving salts of $EDMI^+$ and $BF_4^-$ in a mixed solvent of PC and DMC with the weight ratio of 7 : 3 is used as electrolytic solution 9.

Average particle diameter D50 of activated carbon in Table 3 is distributed from 3.0 μm to 5.3 μm. When electrodes 3 and 5 are produced by using activated carbon having a small average particle diameter (less than 1 μm), a contact point between the activated carbon particles and the binder tends to be reduced. Therefore, in order to maintain the strength and the flexibility of the polarizable electrode, it is necessary to increase the mass ratio of the binder. In this case, the ratio of the activated carbon contained in the polarizable electrode is reduced, and a volume capacity density as an electrode body is reduced. Therefore, it is preferable that the average particle diameter of the activated carbon is 1 μm or more.

In order to measure the direct current resistance and the electrostatic capacitance of the electric double layer capacitor, the following electric evaluation is carried out. The electric double layer capacitor is charged with a constant current of 1.5A and at a constant voltage of 2.8 V, and then the direct current resistance and the electrostatic capacitance (initial discharge capacity) are measured while being discharged with a constant current of 1.35 A. The direct current resistance is determined from the voltage drop after the start of discharge.

That is to say, the voltage gradient is derived from each measurement voltage during 0.5 to 2.0 seconds after the start of discharge, a voltage at the time of the start of the discharge is determined from this voltage gradient, and the voltage difference between this voltage and the charging voltage (2.8 V) is measured. The direct current resistivity (Ω·m) of a capacitor is calculated from the voltage difference, discharge current, a thickness of the electrode layer, and an area of the electrode layer.

The electrostatic capacitance is determined from a discharge curve between 2.24 V to 1.12 V, and volume electrostatic capacitance ($F/cm^3$) is calculated by dividing the electrostatic capacitance by the total volume of the electrode layer in the electrode. Table 4 shows the direct current resistivity (Ω·m) and the volume electrostatic capacitance ($F/cm^3$) at -30°C, calculated by the above-mentioned method. Fig. 5 shows results of plotting a resistance index that is a value normalized by the direct resistivity of sample X with respect to the ratio obtained by dividing pore volume B having a slit

width of 1.0 to 1.1 nm by total pore volume A. Fig. 6 shows results of plotting the capacitance index that is a value obtained by normalizing a volume electrostatic capacitance of sample X with respect to pore volume C that is a volume of pores having the slit width of 1.1 nm or less. Furthermore, the initial properties of these values and the properties after a voltage of 2.8 V is applied at 60°C for 600 hours (after test) are shown.

Table 4

| | | X | A | B | C | D |
|---|---|---|---|---|---|---|
| Initial | Direct resistivity (Ω·m) | 18.1 | 14.5 | 12.7 | 15.2 | 21.1 |
| | Resistance index | 1.00 | 0.80 | 0.70 | 0.84 | 1.17 |
| | Volume electrostatic capacitance (F/cm$^3$) | 16.6 | 15.5 | 14.3 | 18.5 | 21.1 |
| | Capacitance index | 1.00 | 0.94 | 0.86 | 1.12 | 1.27 |
| After test | Direct resistivity (Ω·m) | 39.7 | 24.5 | 18.9 | 25.6 | 77.2 |
| | Resistance index | 1.00 | 0.62 | 0.48 | 0.64 | 1.94 |
| | Volume electrostatic capacitance (F/cm$^3$) | 13.7 | 13.2 | 13.4 | 15.3 | 15.7 |
| | Capacitance index | 1.00 | 0.96 | 0.98 | 1.12 | 1.15 |

As shown in Table 3 and Fig. 5, in sample A, sample B and sample C, the ratio of pore volume B with respect to pore volume A is 15% or more. In these cases, as shown in Table 4 and Fig. 5, it is shown that the resistance index is less than 1.0, and the resistance is low even at low temperatures. This tendency is particularly remarkable in the result obtained after a voltage of 2.8 V is applied at 60°C for 600 hours. When the rate of pore volume B with respect to pore volume A is less than 15% (samples X and D), the resistance is remarkably increased. From the above-mentioned results, in order to lower the resistance at low temperatures, it is necessary that the ratio of pore volume B with respect to pore volume A is 15%.

Furthermore, as shown in Table 3 and Fig. 6, in samples C and D, pore volume C is 0.9 ml/g or more. In these cases, as shown in Table 4 and Fig. 6, it is shown from Table 4 and Fig. 6 that the capacitance index is large. As compared with the case where pore volume C is less than 0.9 ml/g (samples X, A, and B), the electrostatic capacitance is remarkably larger. Therefore, in order to increase the electrostatic capacitance, it is preferable to use activated carbon having pore volume C of 0.9 ml/g or more.

Note here that only sample C among the activated carbon listed in Table 3 satisfies these both conditions. That is to say, the total pore volume (pore volume B) in which the slit width obtained by the MP method is 1.0 nm or more and 1.1 nm or less is 15% or more of the total pore volume in which the slit width is 2.0 nm or less. The total pore volume (pore volume C) in which the slit width obtained by the MP method is 1.1 nm or less is 0.9 ml/g or more.

Sample C has a low resistance index and a large capacitance index. The improved resistance index and capacitance index are kept not only in the initial property but also even after a voltage is applied at 60°C at 2.8 V for 600 h. Therefore, sample C has reliability in practical use of a device.

Note here that when the total pore volume in which the slit width obtained by the MP method is 1.0 nm or more and 1.1 nm or less is less than 15% of the total pore volume in which the slit width is 2.0 nm or less, the resistance index after a voltage is applied at 60°C at 2.8 V for 600 h is increased as compared with the initial properties. On the other hand, when the total pore volume in which the slit width obtained by the MP method is 1.0 nm or more and 1.1 nm or less is 15% or more of the total pore volume in which the slit width is 2.0 nm or less, the resistance index after a voltage is applied at 60°C at 2.8 V for 600 h is reduced as compared with the initial properties. This means that in the case where the ratio of the total pore volume A is less than 15%, the increase in the resistance by the deterioration is especially large and this case is not suitable for practical use. Therefore, it is desirable that the ratio is the value or more.

It is thought that complex reactions caused by heat generation by the resistance are involved in the process of deterioration. However, at present, it is difficult to elucidate the mechanism. Since reducing the resistance index is effective to suppress the deterioration because it reduces the heat generation. The present invention is based on the finding that the deterioration rate of the resistance index is different depending on whether or not the ratio of the total amount of pore volume A is 15% or more and that the resistance index can be kept small when the ratio is 15% or more.

Furthermore, the change rates of the capacitance index with respect to the pore volume density of the initial property and the property after a voltage is applied at 60°C at 2.8 V for 600 h is small when the total pore volume in which the slit width obtained by the MP method is 1.1 nm or less is less than 0.9 ml/g. On the other hand, they are large when the total pore volume in which the slit width obtained by the MP method is 1.1 nm or less is 0.9 ml/g or more. Thus, there is a clear difference depending upon whether or not the total pore volume is 0.9 ml/g or more. This is thought to

be related to the filling ratio of ions in the pore. That is to say, in order not to prevent the entry of ions into the pore, it is necessary that the slit width is larger than the minimum width of the van der Waals molecule of the ion. However, in activated carbon having a small pore volume density, the ratio of pores having a small slit width tends to be increased. Therefore, it is thought that the entry of ions into the pore is prevented and the filling ratio is small. As a result, an efficiency of creating capacity tends to be lowered. Therefore, the present invention is based on the findings that the density of pore volume B is largely different depending upon whether or not the density of pore volume B is 0.9 ml/g or more, and when the density is 0.9 ml/g or more, the filling ratio of ions in the pore is improved and the capacitance is remarkably increased according to the increase in the pore volume density.

As mentioned above, the ionic conductivity has a maximum value as a function of the slit width. $EDMI^+ BF_4^-$ / PC has a maximum when the slit width is in the range of 1.0 nm to 1.1 nm and in its vicinity. The lower limit and the upper limit of the slit width agree with the values determined from the structure and the size of the ion and the solvent molecule constituting the electrolytic solution. From the above-mentioned experiment results, in an actual electric double layer capacitor produced by using activated carbon, it is confirmed that the use of activated carbon having many pores distributed in a range between the upper limit and the lower limit of the slit width makes it possible to reduce the direct current resistance. This result means that the natural laws controlling the behavior of electrolytic ion in the electrolytic solution in the porous carbon electrode such as activated carbon, which has been difficult to be understood, is correctly used.

In the above description, an example using $EDMI^+ BF_4^-$ / +DMC, as an electrolytic solution is described. Although not specifically shown, even when other electrolytic solutions are used, it is confirmed that resistance can be reduced when a total pore volume of activated carbon in which a slit width obtained by an MP method is W1 or more and W2 or less is 15% or more of the total pore volume in which the slit width is 2.0 nm or less. Furthermore, it is confirmed that the electrostatic capacitance can be increased when a total pore volume of activated carbon in which the slit width obtained by an MP method is W2 or less is 0.9 ml/g or more.

INDUSTRIAL APPLICABILITY

An electrochemical element using activated carbon for an electrochemical element of the present invention shows low direct current resistivity, and has a large power density. Such an electrochemical element can be used as power source devices for various electronic apparatuses, automobiles such as electric, hybrid and fuel cell automobiles, and other industrial apparatuses. This can largely contribute to a stable operation of an apparatus, energy saving, and the like.

REFERENCE MARKS IN THE DRAWINGS

| | |
|---|---|
| 1 | capacitor element |
| 2 | anode lead wire |
| 3 | electrode (first polarizable electrode) |
| 3A | current collector (first current collector) |
| 3B | electrode layer (first polarizable electrode layer) |
| 4 | cathode lead wire |
| 5 | electrode (second polarizable electrode) |
| 5A | current collector (second current collector) |
| 5B | electrode layer (second polarizable electrode layer) |
| 6 | separator |
| 7 | sealing member |
| 8 | case |
| 9 | electrolytic solution |

## Claims

**1.** Activated carbon used for an electrochemical element comprising the activated carbon and an electrolytic solution, wherein under definitions that van der Waals molecular diameters of a cation, an anion, and a solvent contained in the electrolytic solution are denoted by Lc, La, and Ls, respectively;
minimum widths of van der Waals molecules of the cation, the anion, and the solvent are denoted by Lmin,c, Lmin, a, and Lmin,s, respectively;

a maximum value of Lc, La, Ls, Lmin,c, Lmin,a, and Lmin,s is denoted by W1; and
a minimum values of (Lc + La), (Lc + Ls), (La +Ls), (Lmin,c + Lmin,a), (Lmin,c + Lmin,s), and (Lmin,a + Lmin,s) is denoted by W2,
a total pore volume of the activated carbon in which a slit width obtained by an MP method is W1 or more and W2 or less is 15% or more of a total pore volume in which the slit width is 2.0 nm or less.

**2.** The activated carbon used for an electrochemical element according to claim 1, wherein a total pore volume of the activated carbon in which the slit width obtained by the MP method is W2 or less is 0.9 ml/g or more.

**3.** The activated carbon used for an electrochemical element according to claim 2, wherein W2 is 1.1 nm.

**4.** The activated carbon used for an electrochemical element according to claim 1, wherein W1 is 1.0 nm, and W2 is 1.1 nm.

**5.** The activated carbon used for an electrochemical element according to claim 1, wherein the electrolytic solution includes at least one or more cations represented by chemical formula (1):

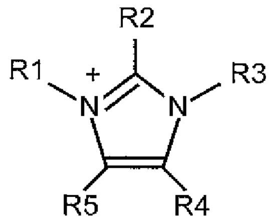

(1)

wherein, independently for each occurrence, R1, R2, R3, R4, and R5 represent a hydrogen atom or an alkyl group containing 1 to 10 carbon atoms, any of R1 to R5 may be the same, and carbon atoms contained in R1 to R5 may bond together to form a cyclic structure.

**6.** The activated carbon used for an electrochemical element according to claim 1, wherein the electrolytic solution includes at least any of tetrafluoroborate and hexafluorophosphate as an anion.

**7.** The activated carbon used for an electrochemical element according to claim 1, wherein the electrolytic solution includes 1-ethyl-2,3-dimethyl imidazolium as a cation, tetrafluoroborate as an anion, and at least propylene carbonate as a solvent.

**8.** An electrochemical element comprising:

a positive electrode;
a negative electrode;
an electrolytic solution provided between the positive electrode and the negative electrode; and
a case accommodating the positive electrode, the negative electrode, and the electrolytic solution,
wherein at least one of the positive electrode and the negative electrode has activated carbon used for an electrochemical element according to claim 1.

**9.** The electrochemical element according to claim 8, wherein a total pore volume of the activated carbon in which a slit width obtained by an MP method is W2 or less is 0.9 ml/g or more.

**10.** The electrochemical element according to claim 9, wherein W2 is 1.1 nm.

**11.** The electrochemical element according to claim 8, wherein W1 is 1.0 nm and W2 is 1.1 nm.

**12.** The electrochemical element according to claim 8, wherein the electrolytic solution includes at least one or more cations represented by chemical formula (1).

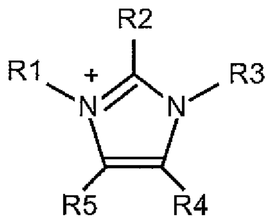

(1)

wherein, independently for each occurrence, R1, R2, R3, R4, and R5 represent a hydrogen atom or an alkyl group containing 1 to 10 carbon atoms, any of R1 to R5 may be the same, and carbon atoms contained in R1 to R5 may bond together to form a cyclic structure.

**13.** The electrochemical element according to claim 8, wherein the electrolytic solution includes at least one of tetrafluoroborate and hexafluorophosphate as an anion.

**14.** The electrochemical element according to claim 8, wherein the electrolytic solution includes 1-ethyl-2,3-dimethyl imidazolium as a cation, tetrafluoroborate as an anion, and at least propylene carbonate as a solvent.

FIG. 1

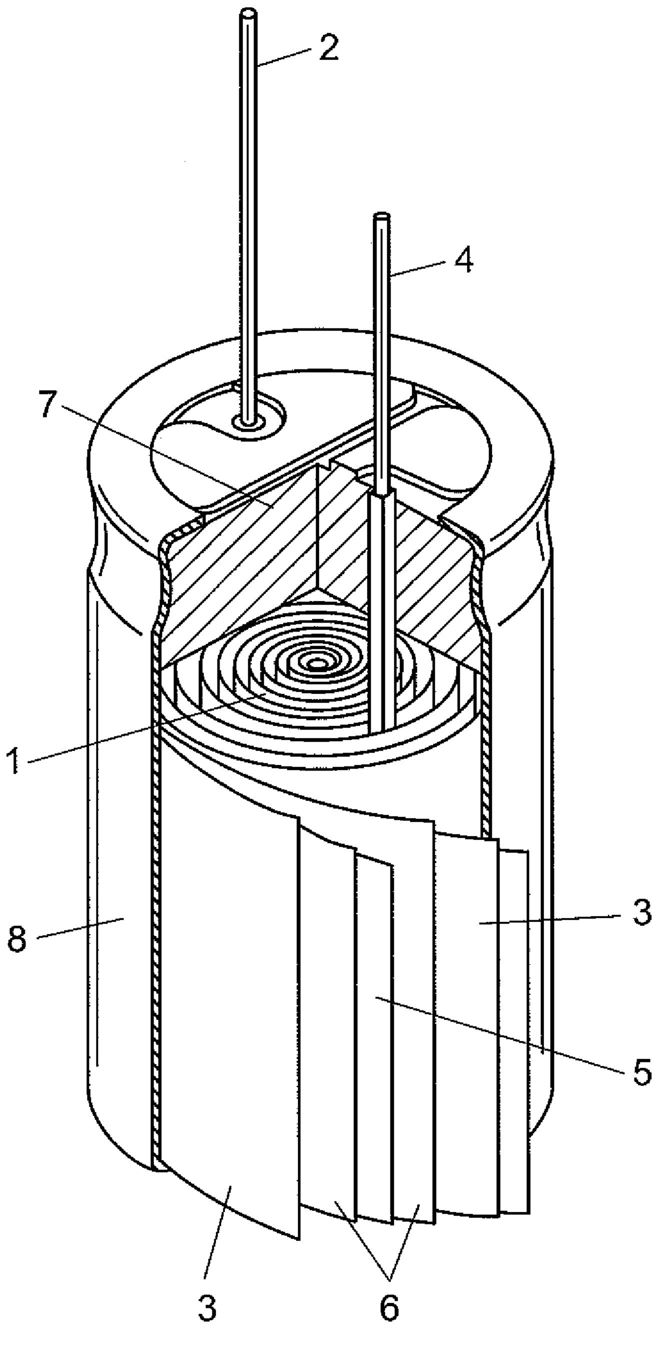

FIG. 2A

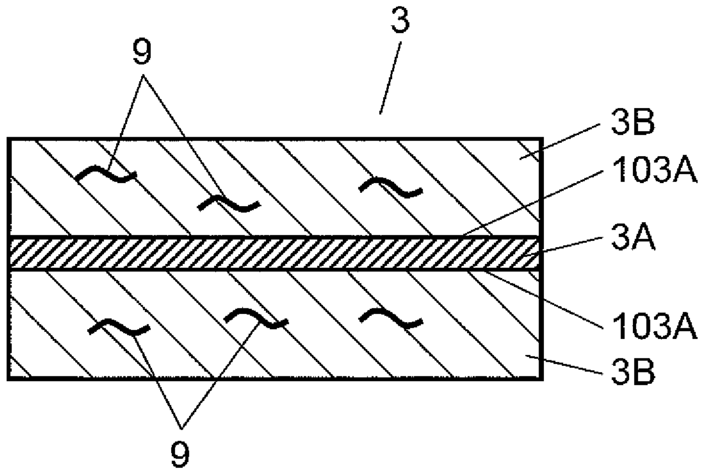


FIG. 2B

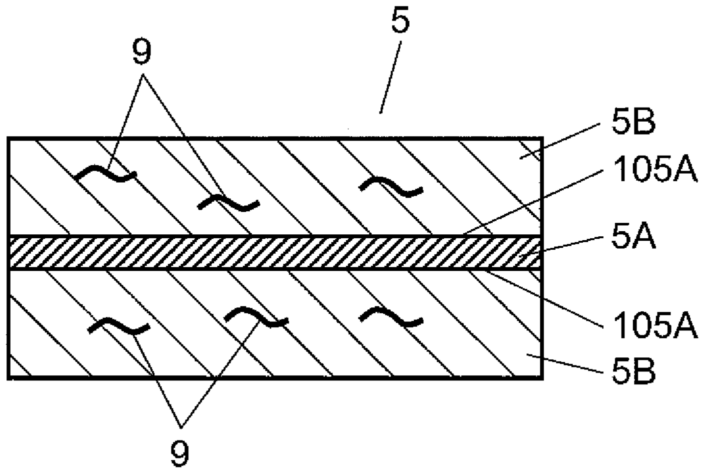

FIG. 3

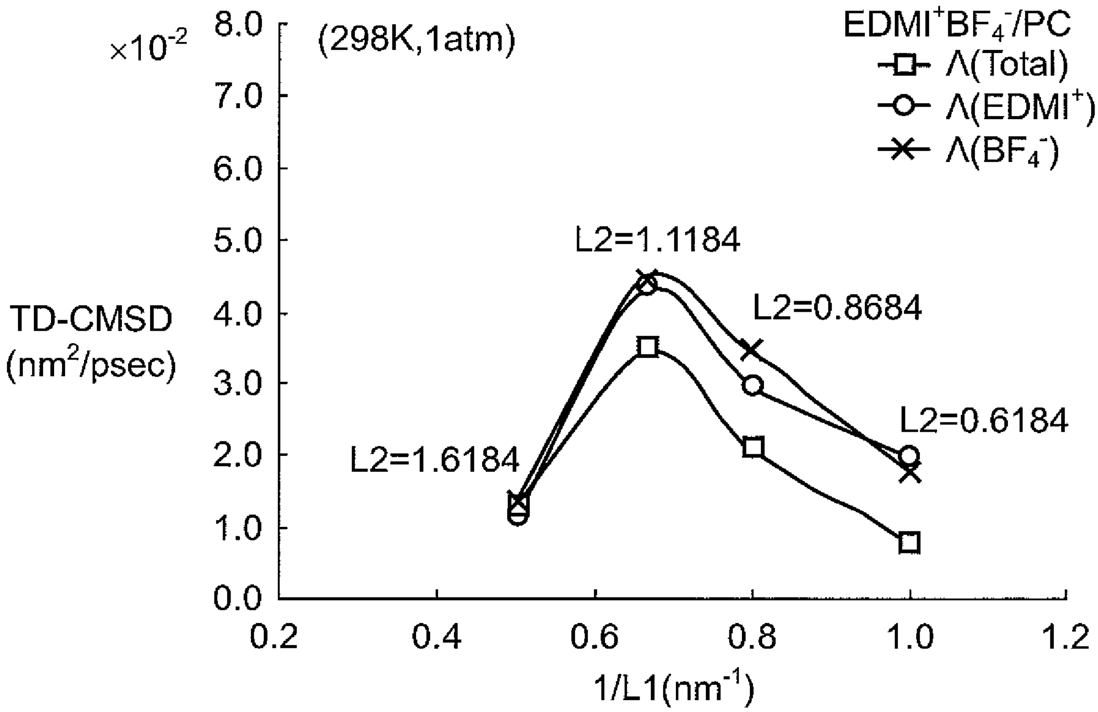
×10^-2
8.0
7.0
6.0
5.0
4.0
3.0
2.0
1.0
0.0
TD-CMSD
(nm^2/psec)
(298K,1atm)
EDMI+BF4-/PC
Λ(Total)
Λ(EDMI+)
Λ(BF4-)
L2=1.1184
L2=0.8684
L2=0.6184
L2=1.6184
0.2
0.4
0.6
0.8
1.0
1.2
1/L1(nm^-1)

# FIG. 4A

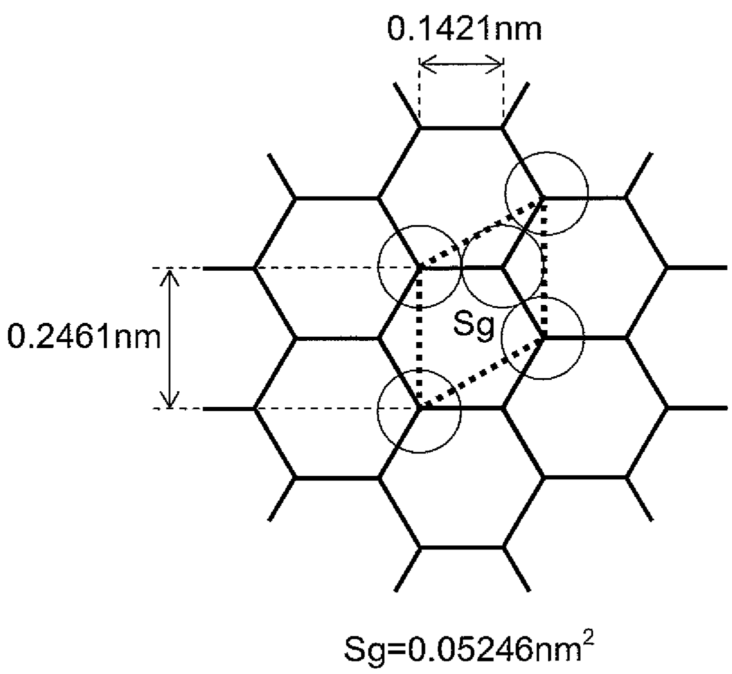
0.1421nm
0.2461nm
Sg
Sg=0.05246nm²

# FIG. 4B

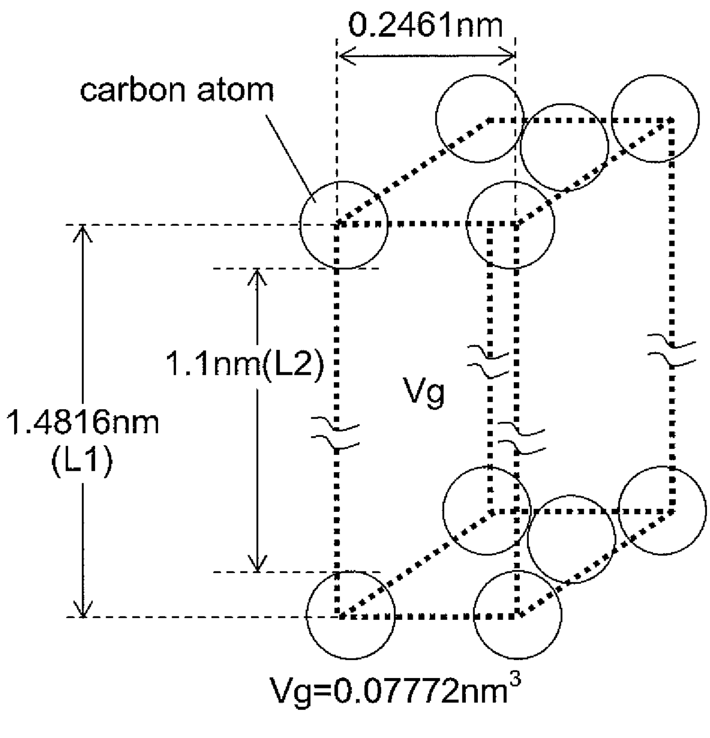
0.2461nm
carbon atom
1.1nm(L2)
Vg
1.4816nm
(L1)
Vg=0.07772nm³

FIG. 5

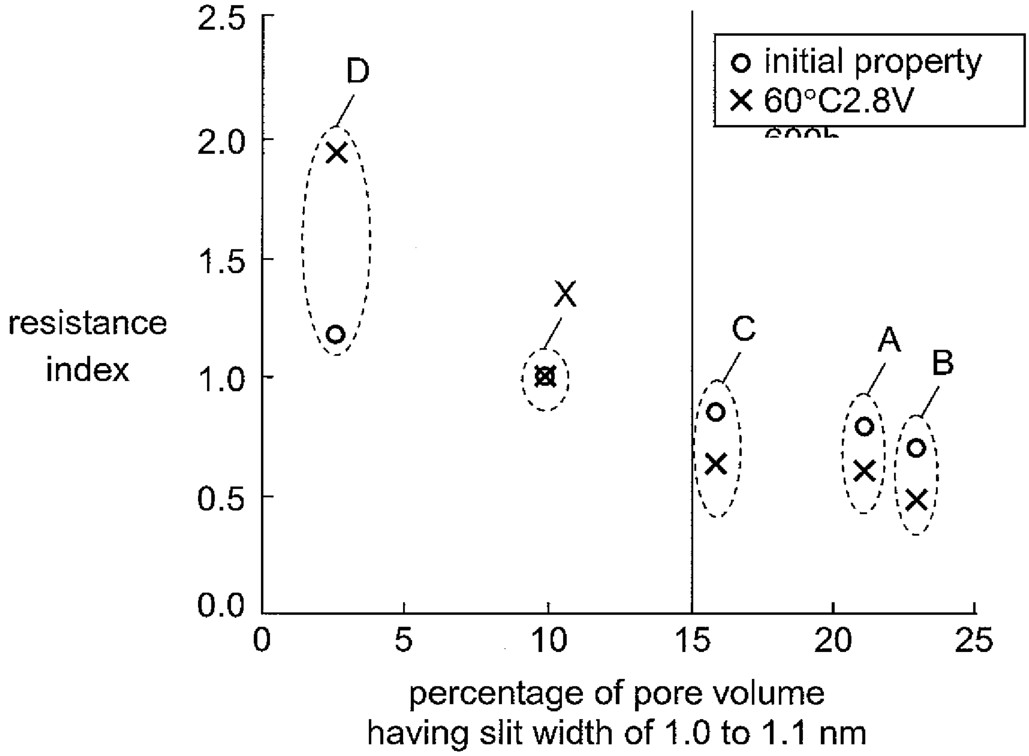

2.5
2.0
1.5
1.0
0.5
0.0
resistance index
D
X
C
A
B
o initial property
× 60°C2.8V 600h
0
5
10
15
20
25
percentage of pore volume having slit width of 1.0 to 1.1 nm


FIG. 6

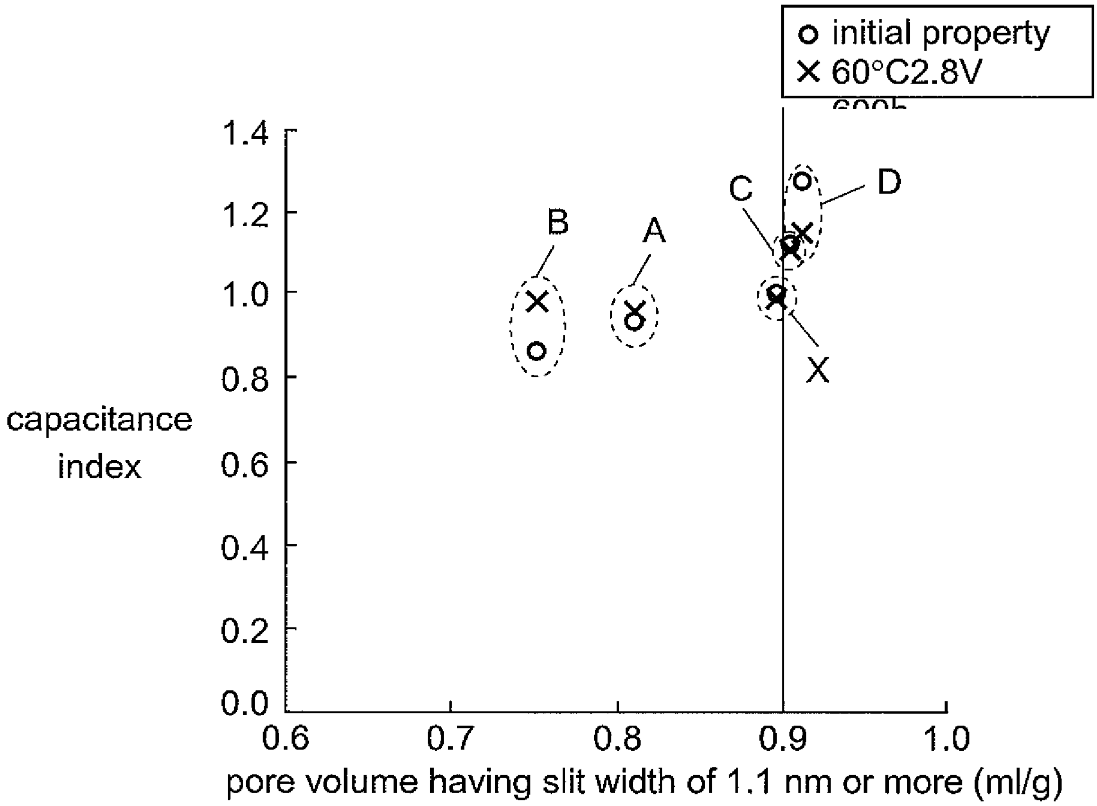

o initial property
× 60°C2.8V 600h
1.4
1.2
1.0
0.8
0.6
0.4
0.2
0.0
capacitance index
B
A
C
D
X
0.6
0.7
0.8
0.9
1.0
pore volume having slit width of 1.1 nm or more (ml/g)

**INTERNATIONAL SEARCH REPORT**

International application No.
PCT/JP2009/002788

A. CLASSIFICATION OF SUBJECT MATTER
H01G9/058(2006.01)i, C01B31/08(2006.01)i, H01G9/038(2006.01)i, H01M4/58 (2006.01)i, H01M10/36(2006.01)i

According to International Patent Classification (IPC) or to both national classification and IPC

B. FIELDS SEARCHED

Minimum documentation searched (classification system followed by classification symbols)
H01G9/058, C01B31/08, H01G9/038, H01M4/58, H01M10/36

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2009 |
| Kokai Jitsuyo Shinan Koho | 1971-2009 | Toroku Jitsuyo Shinan Koho | 1994-2009 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 2007-320842 A (Toyota Motor Corp.), 13 December, 2007 (13.12.07), Full text; all drawings (Family: none) | 1-14 |
| A | JP 2006-286923 A (Fuji Heavy Industries Ltd.), 19 October, 2006 (19.10.06), Full text (Family: none) | 1-14 |
| A | JP 2005-197666 A (Sanyo Chemical Industries, Ltd.), 21 July, 2005 (21.07.05), Full text & US 2005/0127319 A1 & EP 1542248 A2 | 1-14 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 02 September, 2009 (02.09.09) | 15 September, 2009 (15.09.09) |
| Name and mailing address of the ISA/ Japanese Patent Office | Authorized officer |
| Facsimile No. | Telephone No. |

Form PCT/ISA/210 (second sheet) (April 2007)

**INTERNATIONAL SEARCH REPORT**

International application No.
PCT/JP2009/002788

C (Continuation). DOCUMENTS CONSIDERED TO BE RELEVANT

| Category* | Citation of document, with indication, where appropriate, of the relevant passages | Relevant to claim No. |
|---|---|---|
| A | JP 2006-319322 A (Sumitomo Chemical Co., Ltd.), 24 November, 2006 (24.11.06), Full text; all drawings & US 2008/0094777 A1 & EP 1876611 A1 & WO 2006/109815 A1 | 1-14 |
| A | JP 2008-60282 A (Seiko Instruments Inc.), 13 March, 2008 (13.03.08), Full text; all drawings (Family: none) | 1-14 |
| A | JP 2001-118753 A (Matsushita Electric Industrial Co., Ltd.), 27 April, 2001 (27.04.01), Full text & US 6592838 B1 & EP 1094478 A2 | 1-14 |

Form PCT/ISA/210 (continuation of second sheet) (April 2007)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2007320842 A
- JP 2006286923 A
- JP 2005197666 A
- JP 2008147283 A


### Non-patent literature cited in the description


- **A. Bondi.** *J. Phys. Chem.,* 1964, vol. 68, 441
- **W. D. Cornell ; P. Cieplak ; C. I. Bayly ; I. R. Gould ; K. M. Merz Jr. ; D. M. Ferguson ; D. C. Spellmeyer ; T. Fox ; J. W. Caldwell ; P. A. Kollman.** *J. Am. Chem. Soc.,* 1995, vol. 117, 5179
- **C. I. Bayly ; P. Cieplak ; W. D. Cornell ; P. A. Kollman.** *J. Phys. Chem.,* 1993, vol. 97, 1026
- **W. A. Steele.** *Surface Science,* 1973, vol. 36, 317
- **S. Nose.** *Mol. Phys.,* 1984, vol. 52 (2), 255
- **W. G. Hoover.** *J. Chem. Phys.,* 1966, vol. 46 (2), 686
- **W. G. Hoover.** *Phys.Rev. A.,* 1985, vol. 31 (3), 1695
- **M. Parrinello ; A. Rahman.** *Rhys. Rev. Lett.,* 1980, vol. 45 (14), 1196
- **R. Kubo.** *J. Phys. Soc. Jpn.,* 1957, vol. 12, 570